(19)

**Europäisches Patentamt**
**European Patent Office**
**Office européen des brevets**

(11) **EP 4 089 061 A1**

(12) **EUROPEAN PATENT APPLICATION**

(43) Date of publication:
**16.11.2022 Bulletin 2022/46**

(51) International Patent Classification (IPC):
**C04B 5/06** (2006.01)

(21) Application number: **21198986.8**

(52) Cooperative Patent Classification (CPC):
**C04B 5/06**

(22) Date of filing: **24.09.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.05.2021 IT 202100012524**

(71) Applicant: **Opigeo S.r.l.**
**35138 Padova (IT)**

(72) Inventors:
- **BELLOTTO, Maurizio Pietro**
  **20144 Milano (MI) (IT)**
- **ZANNELLI, Simone Vittorio**
  **36100 Vicenza (IT)**
- **BROTTO, Manuela**
  **35031 Abano Terme (PD) (IT)**

(74) Representative: **Gallo, Luca et al**
**Gallo & Partners S.r.l.**
**Via Rezzonico, 6**
**35131 Padova (IT)**

(54) **PROCESS FOR PRODUCING A PRECURSOR FOR A HYDRAULIC BINDER**

(57) Process for producing a precursor for a hydraulic binder comprising a step of arranging a steelworks slag within a container, and such steelworks slag comprises a combination of calcium oxide (CaO), silicon oxide ($SiO_2$), and aluminum oxide ($Al_2O_3$), which is in a quantity greater than or equal to 60% with respect to the weight of the slag, and iron oxides, in a quantity lower than or equal to 15% with respect to the weight of the slag. The method also comprises a step of arranging a silica addi-
tive, comprising at least silicon oxide ($SiO_2$).

The method also comprises an admixing step, in which the silica additive is poured into the container, in a quantity comprised between 10 % and 40 % with respect to the total weight, and a mixing step, in which the foundry slag is mixed with the silica additive at a temperature comprised between 1300 and 1800 °C, in order to obtain the precursor.

**Fig. 1**

**Description**

Field of application

The present invention regards a process for producing a precursor for a hydraulic binder according to the preamble of the respective independent claims.

The precursor for hydraulic binder obtained with the process, object of the present invention, is advantageously employable in the field of civil engineering, for example of building or road type.

The process for producing a precursor for a hydraulic binder is attained starting from a steelworks slag preferably derived from secondary metallurgy processes of steel, such as in particular white steelworks slag.

More particularly, the present process is employable as a process for recovery and increasing value of a foundry slag in order to obtain a precursor for a hydraulic binder.

Therefore, the process for producing a precursor for hydraulic binder falls within the industrial field of the production of raw materials for civil engineering, and more particularly in the industrial field of the production of raw materials which can be used in the formulation of hydraulic binders, preferably as alternatives to common Portland cement.

State of the art

With the expression hydraulic binder it is intended an inorganic material which, when mixed with water, is subjected to a hydration reaction in order to form a paste, which is initially deformable and workable and which gradually hardens, both in air and in water, up to taking on high mechanical strength properties. Such property is due to the formation of hydrated, insoluble or poorly soluble substances, starting from calcium silicates, aluminates and ferrites present in the binder.

The hydraulic binder is therefore susceptible of being employed in the attainment of manufactured goods and structures intended for civil use such as building, geotechnical, infrastructural, hydraulic, structural and urban planning works in general.

The most common hydraulic binder is Portland cement, which mixed with water forms a cementitious paste known in the technical jargon of the sector with the term "grout". Portland cement is obtained by grinding the baking product of a mixture of clay and limestone (in jargon termed "clinker") with small additions of gypsum, wherein gypsum takes on the role of regulator of hydration reactions.

More in detail, the Portland cement production process includes a step of mixing and grinding of the raw materials, consisting of clay and limestone, a baking step, by means of a fuel burner at a temperature of about 1450 °C, from which clinker is obtained in the form of centimeter granules.

The clinker is subsequently cooled, mixed with gypsum (as described above) and subsequently ground, to obtain Portland cement, which is then miscible with water to allow the hydration reaction and allow the use of Portland cement as a hydraulic binder. The use of Portland cement as a hydraulic binder has proved to be not without drawbacks in practice.

The main drawback lies in the fact that this production process, in addition to requiring significant energy consumption (both for the two grinding steps and for the baking step), produces during the baking step, through the fuel burner, a high quantity of greenhouse gases, and in particular of carbon dioxide.

In fact, it is now established that the production of Portland cement is one of the main causes of greenhouse gas emissions (and in particular carbon dioxide) at a global level. In particular, most of the aforementioned carbon dioxide ($CO_2$) produced derives from the production processes of clinker, both due to the calcination reactions of the limestone and the combustion of fossil fuels. In fact, it is estimated that the production of one ton of clinker produces an amount of carbon dioxide ($CO_2$) equal to 862 kg.

In order to at least partially solve the problem of greenhouse gas emissions during the production of Portland cement, geopolymeric and/or alkaline-activated hydraulic binders have been developed, whose production method (not involving the use of clinker) allows the carbon dioxide emissions to be reduced, making these binders less impacting on the environment.

The main materials, aluminosilicate precursors, used (alone or in combination with each other) for making the aforesaid binders are granulated blast furnace slags, metakaolin and fly ash, which are mixed with an alkaline activator (for example a solution of sodium or potassium hydroxide and/or silicate). Over time, alkaline-activated hydraulic binders have been developed the most, including granulated and ground blast furnace slag (also known as GGBS), which allow a binder with high chemical resistance and good mechanical properties to be obtained.

More in detail, the granulated blast furnace slags are obtained by means of a process of quick cooling of the blast furnace slag (known in the technical jargon of the field as blast furnace slag) which is a by-product of cast iron production.

The aforesaid aluminosilicate precursors of the geopolymeric and/or alkaline-activated binders can be employed on their own by means of an alkaline activation or they can be mixed with a variable quantity of Portland cement, so as to improve the mechanical properties of the mixture.

In particular, the hydraulic binders attained starting from a granulated and ground blast furnace slag with the addition of a mixture of Portland cement are commonly known in the field with the expression "blast furnace cements" and indicated with CEM-III.

Also the aforesaid geopolymeric and/or alkaline-activated binders and the blast furnace cements, attained starting from aluminosilicate precursors, has in practice demonstrated that it does not lack drawbacks.

A first drawback lies in the fact that the blast furnace slag (from which the granulated blast furnace slag is obtained) can only be obtained as a by-product of the cast iron production process.

Therefore, the quantity of blast furnace slag produced is strictly correlated to the demand for cast iron, rendering difficult the establishment of a supply-demand market in which the blast furnace slag is produced following a request for only the blast furnace cement or more generally for the alkaline-activated hydraulic binder, independent of the cast iron production.

A further drawback lies in the fact that the blast furnace slag has a higher cost than the common Portland cement, due to the production cycle with which it is obtained. The cost of the blast furnace slag in fact comprises numerous accessory costs which derive from the cast iron production process and which determine an increase of the cost of the blast furnace slag itself.

Therefore, since Portland cement is still advantageous from an economic standpoint as well as regarding the ease of retrieval of the raw material, over the years the hydraulic binders alternative to Portland cement have not had sufficient use to justify the economic investments intended for research and development and for the design of dedicated plants.

Therefore, regarding the progressive and complete substitution of the common Portland cement, the blast furnace slag obtained from the cast iron production is not sustainable from an economic standpoint nor is it sufficient to provide for the demand (progressively increasing) of raw material.

## Presentation of the invention

In this situation, the problem underlying the present invention is to eliminate the drawbacks of the abovementioned prior art, by providing a process for producing a precursor for a hydraulic binder which is not correlated with the process for producing cast iron.

A further object of the present invention is to provide a process for producing a precursor for a hydraulic binder which allows the recovery of waste materials of iron/steel-making processes intended for disposal in a dump.

A further object of the present invention is to provide a process for producing a precursor for a hydraulic binder which is an alternative to the processes presently known in the field.

A further object of the present invention is to provide a process for producing a precursor for a hydraulic binder which is simple and inexpensive to attain.

A further object of the present invention is to provide a process for producing a precursor for a hydraulic binder which has limited environmental impact.

## Brief description of the drawings

The technical characteristics of the invention, according to the aforesaid objects, are clearly seen in the contents of the below-reported claims and the advantages thereof will be more evident from the following detailed description, made with reference to the enclosed drawings, which represent several merely exemplifying and non-limiting embodiments of the invention, in which:

-    figure 1 shows a ternary diagram (calcium, magnesium) - silicon -(aluminum, iron), in which typical compositional intervals are compared with the compositional interval of a precursor for a hydraulic binder according to the present invention;
-    figure 2 shows a graph of a colorimetric test executed on an example of hydraulic binder comprising a precursor for a hydraulic binder according to the present invention, and compared with a colorimetric test executed on a hydraulic binder comprising blast furnace slag.

## Detailed description of a preferred embodiment

The process, object of the present invention, is employable for producing a precursor for a hydraulic binder and is advantageously employable as an alternative process to the present processes for producing precursors for hydraulic binders, such as for example blast furnace slag.

More in detail, therefore, the process, object of the present invention, is advantageously employable in order to obtain a precursor for a synthetic hydraulic binder, preferably aluminosilicate.

The precursor for hydraulic binder obtained with the aforesaid process is preferably an alkaline-activated precursor, and is advantageously employable as an alternative to common hydraulic binders with cementitious base, such as Portland cement.

More in detail, with the term "precursor", a material is intended hereinbelow, preferably an aluminosilicate mixture, provided with latent hydraulic properties and susceptible of forming a hydraulic binder, preferably if mixed with an alkaline solution such as for example sodium or potassium hydroxide and/or silicate.

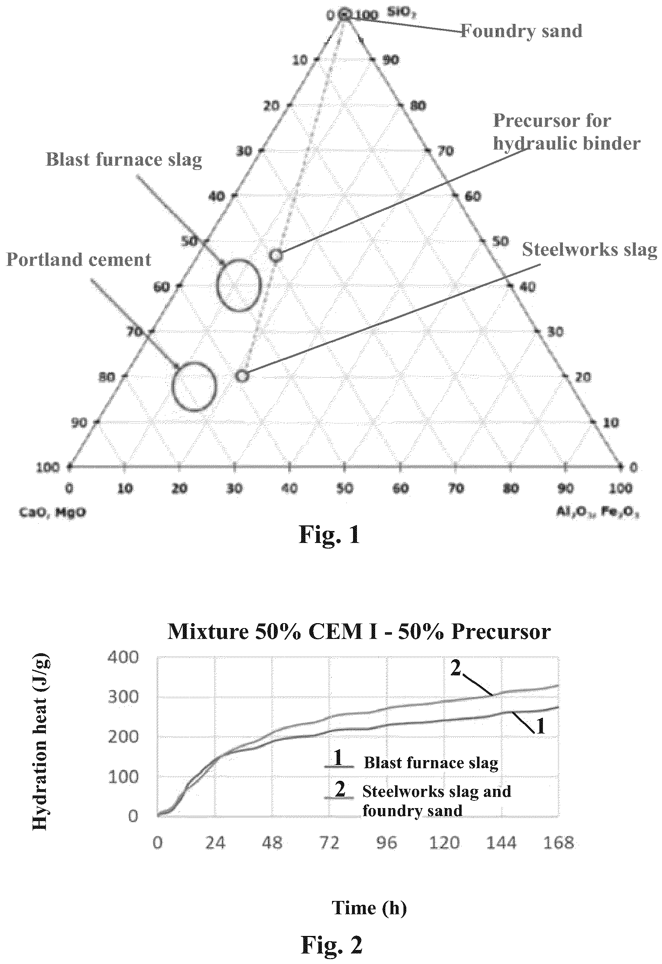

In particular, the precursor obtained by means of the process, object of the present invention, is provided with a composition which is advantageously similar to that of the common blast furnace slag, as is better shown in figure 1.

More in detail, figure 1 shows a ternary compositional diagram (CaO, MgO), $SiO_2$, ($Al_2O_3$, $Fe_2O_3$), which reports the compositional intervals (of the aforesaid three oxides) of the precursor produced by means of the process, object of the present invention, of the employed steelworks slag, of the blast furnace slag and of the Portland cement. Advantageously, the precursor obtained with the process, object of the present invention, is employable on its own by means of alkaline activation or in combination with other geopolymeric and/or cementitious (e.g. Portland cement) hydraulic binders. In a per se known manner, the hydraulic binders formulated with the aforesaid precursor are advantageously employable for making manufactured items (e.g. in the building field) and are for such purpose miscible with water and with aggregates (gross or fine), such as for example gravel and/or sand, in order to obtain a mortar or a concrete.

In accordance with the idea underlying the present invention, the process comprises a step of arranging a steelworks slag, within a container, and a silica additive.

More in detail, with the expression "steelworks slag" it will hereinbelow be preferably intended a by-product obtained from metallurgy processes, and preferably from secondary metallurgy processes for refining steels.

Advantageously, the steelworks slag employed in the following process is "white" steelworks slag, which is preferably obtained from the ladle furnace following the steel refining processes.

Of course, without departing from the protective scope of the present invention, the steelworks slag employed can be of different type, e.g. "black" slag, preferably obtained from an electric furnace (electric arc smelting furnace), i.e. slag, preferably obtained from an electric furnace (electric arc smelting furnace), i.e. slag obtained from the process of conversion and decarburization of steel in an oxygen furnace (basic oxygen furnace).

It is also possible to use a steelworks slag obtained from the mixing of two or more slags.

In accordance with the invention, the employed steelworks slag comprises a combination of calcium oxide (CaO), silicon oxide ($SiO_2$) and aluminum oxide ($Al_2O_3$), which is in a quantity greater than or equal to 60% with respect to the weight of the entire employed steelworks slag.

Preferably, the sum of the quantities of calcium oxide (CaO), of silicon oxide ($SiO_2$) and of aluminum oxide ($Al_2O_3$) within the steelworks slag is greater than or equal to 75% with respect to the weight of the entire employed steelworks slag.

In accordance with the preferred formulation of employed steelworks slag, this comprises a quantity of calcium oxide (CaO), silicon oxide ($SiO_2$) and aluminum oxide ($Al_2O_3$) whose sum is about 90% with respect to the total weight of the steelworks slag. Advantageously, the quantity of calcium oxide (CaO) present within the steelworks slag is greater than or equal to 30%, and preferably at least greater than or equal to 45%, with respect to the total weight of the steelworks slag.

Advantageously, moreover, the sum of the quantity of calcium oxide (CaO) and of one between silicon oxide ($SiO_2$) and aluminum oxide ($Al_2O_3$) is greater than or equal to 50%, and preferably greater than or equal to 70%.

In addition, the employed steelworks slag comprises iron oxides in a quantity lower than or equal to 15% with respect to the weight of the entire slag.

Advantageously, the quantity of iron oxides present in the steelworks slag is lower than 10% and preferably lower than 5%.

Of course, the employed steelworks slag can also not substantially contain iron oxides, or only has traces (in which the content of iron oxides is lower than 1%).

More in detail, with the expression "iron oxides", it will be intended hereinbelow, preferably, the sum of all the iron oxides present within the aforesaid steelworks slag, such as for example Wustite (FeO), Hematite ($Fe_2O_3$), Magnetite ($Fe_3O_4$) and of the metallic iron whose content is expressed in oxide form.

Advantageously, the steelworks slag is provided with a mineralogical composition of the type depicted in table 1, in which the column "Preferred interval" reports the compositional interval of each element, and the column "Embodiment" reports the precise composition of the employed steelworks slag in the preferred embodiment ("white" steelworks slag).

Preferably, the employed steelworks slag also comprises magnesium oxide (MgO), in a quantity lower than 20%, and preferably in a quantity comprised between 3% and 10%. Advantageously, the employed steelworks slag comprises one or more of the following metallic oxides: sodium oxide ($Na_2O$), potassium oxide ($K_2O$), titanium oxide

(TiO$_2$), manganese oxide (MnO) which are preferably present in reduced quantities (in particular with percentages lower than 5% with respect to the total weight of the slag). Advantageously, the slag can also comprise further components in the form of elements, oxides or compounds such as for example phosphorus, chromium and sulfur, which are preferably present in the form of traces (with percentages lower than 1% with respect to the total weight of the slag).

**Table 1** - Composition of the steelworks slag

| Oxide | Preferred interval [%] | Embodiment [%] |
|---|---|---|
| Silicon oxide (SiO$_2$) | 2-35 | 20 |
| Calcium oxide (CaO) | 30-60 | 51 |
| Aluminum oxide (Al$_2$O$_3$) | 5-35 | 17 |
| Magnesium oxide (MgO) | 1-18 | 7 |
| Hematite (Fe$_2$O$_3$) | 0.1-15 | 4 |
| Sodium oxide (Na$_2$O) | 0-5 | 0.1 |
| Potassium oxide (K$_2$O) | 0-5 | 0.04 |
| Titanium oxide (TiO$_2$) | 0-5 | 0.4 |
| Manganese oxide (MnO) | 0-5 | 0.5 |
| Potassium | 0.1-0.4 | 0 |
| Sulfur | 0.1-1 | 1.65 |
| Chromium | 0-0.5 | 0.1 |

Advantageously, the steelworks slag is provided with a mineralogical composition of the type depicted in table 2, and more particularly comprises preferably Mayenite (C$_{12}$A$_7$), Celite, or tricalcium aluminate, (C3A) Hatrurite (C$_3$S), Quartzite (SiO$_2$) and Portlandite (Ca(OH)$_2$).

Advantageously, the steelworks slag also comprises one or more of the following minerals: Larnite (β-C$_2$S), Ca-Olivine (γ-C$_2$S), Gehlenite (C$_2$AS), Merwinite (C$_3$MS$_2$), Periclase (MgO) and Perovskite.

As anticipated above, the aforesaid arranging step also provides for the arranging of a silica additive, which comprises at least silicon oxide (SiO$_2$).

**Table 2** - Mineralogical phases of the steelworks slag (the compositions of the calcium aluminates and silicates are expressed with the terminology used in the cement field).

| Phase | Preferred interval [%] | Embodiment [%] |
|---|---|---|
| Mayenite (C$_{12}$A$_7$) | 10-50 | 24 |
| Tricalcium aluminate (C$_3$A) | 0-50 | 46 |
| Hatrurite (C$_3$S) | 0-30 | 13 |
| Larnite (β-C$_2$S) | 0-40 | - |
| Quartzite (SiO$_2$) | 0-15 | 9 |
| Portlandite (Ca(OH)$_2$) | 0-15 | 8 |
| Ca-olivine (γ-C$_2$S) | 0-20 | - |
| Gehlenite (C$_2$AS) | 0-20 | - |
| Merwinite (C$_3$MS$_2$) | 0-30 | - |
| Periclase (MgO) | 0-10 | - |
| Perovskite | 0-10 | - |

Advantageously, the silica additive possesses a grain size D90 lower than 250 micron. Preferably, the process comprises a first grinding step, in which the silica additive is ground up to a grain size D90 lower than 250 micron, as indicated above. Advantageously, the silica additive comprises steelworks sand, which contains at least silicon oxide

(SiO$_2$), preferably in a quantity greater than 80% with respect to the total weight of the silica additive.

In this manner, it is advantageously possible to recycle the steelworks sand, normally employed for making the molten metal casting molds and subsequently sent to a dump, allowing the further reduction of the environmental impact of the process, object of the present invention.

Advantageously, the silica additive also comprises a compound containing carbon in a quantity greater than 3% with respect to the total weight of the silica additive. Advantageously, the compound containing carbon comprises at least one from between carbon black, coke and an organic polymer. In particular the organic polymer is preferably a phenol resin.

Advantageously, the silica additive at least comprises Quartzite (SiO$_2$).

In accordance with the preferred formulation of the silica additive, the latter is provided with a mineralogical composition of the type depicted in table 3, and more particularly comprises Quartzite (SiO$_2$), Feldspar ((Na,K)(AlSi$_3$O$_8$)) and preferably Diopside (CaMgSi$_2$O$_6$), Montmorillonite ((Na,Ca)$_{0.3}$(Al,Mg)$_2$Si$_4$O$_{10}$)(OH)$_2 \cdot$n(H$_2$O) and Ankerite (Ca(Fe$^{2+}$, Mg, Mn)(CO$_3$)$_2$).

Table 3 - Mineralogical phases of the silica additive

| Phase | Preferred interval | Embodiment |
|---|---|---|
| Quartz (SiO$_2$) | 80-95 % | 86% |
| Feldspar ((Na,K)(AlSi$_3$0$_8$)) | 0-10 % | 7 % |
| Diopside (CaMgSi$_2$O$_6$) | 0-10 % | 4% |
| Montmorillonite ((Na,Ca)$_{0.3}$(Al,Mg)$_2$Si$_4$O$_{10}$(OH)2 $\cdot$ n(H$_2$O)) | 0-5 % | 2% |
| Ankerite (Ca(Fe$_2$+,Mg,Mn)(CO$_3$)$_2$) | 0-5 % | 1 % |

The process also comprises an admixing step, in which the silica additive is poured within the container, in a quantity comprised between 10% and 40% with respect to the total weight. With the expression "total weight" it will be intended the weight of the mixture comprising steelworks slag and silica additive, i.e. the sum of their quantities.

Preferably, in accordance with the preferred embodiment of the present process, the silica additive is poured within the container in a quantity greater than 20% with respect to the total weight, and preferably close to 30%.

Advantageously, the aforesaid admixing step is at least partly carried out during the step of arranging the steelworks slag within the container.

More in detail, the steelworks slag is advantageously gradually poured within the container and at the same time a part of the silica additive is added within the same container, preferably so as to maintain constant the ratio between silicon additive and steelworks slag.

The process also comprises a mixing step, which can advantageously be attained during or after the admixing step, in which the steelworks slag is mixed with the silica additive at a temperature comprised between 1300°C and 1800°C, and preferably comprised between 1600°C and 1700°C, in order to obtain the precursor.

Of course, the mixing step must not necessarily be attained for the entire duration thereof at a temperature comprised between 1300°C and 1800°C, but comprises at least one mixing period in which the temperature is comprised between 1300°C and 1800°C. It was surprisingly found that by mixing a steelworks slag, preferably a "white" steelworks slag, with a silica additive, preferably steelworks sand, one obtains a precursor which is advantageously employable as an alternative to Portland cement. Both the "white" steelworks slag and the steelworks sand are by-products of the iron/steel-making processes, and in particular are waste products, which do not have commercial use at present and which are therefore a cost for the iron/steel-making industries.

The aforesaid precursor is therefore advantageously obtained from the reuse of industrial by-products which are not presently used and are presently disposed of in a dump, in some cases only following costly and complicated pretreatment operations.

In this manner, it is also advantageously possible to attain an alternative process in order to obtain a precursor for a hydraulic binder, preferably with composition similar to the blast furnace slag, which allows disregarding the cast iron production processes.

In this manner, it is therefore possible to obtain alternative supply sources of precursors for hydraulic binders, which allow increasing the production capacity of the aforesaid binders and can allow the complete substitution of the common Portland cement over time.

More in detail, the blast furnace slag is currently obtained only as by-product from the cast iron production process and is thus tied to the cast iron production process both regarding the production capacity and regarding the production costs.

With the precursor obtained by means of the process, object of the invention, it is therefore possible to disregard the accessory costs of the entire cast iron production process.

Advantageously, the step of arranging the steelworks slag provides for the tapping of the steelworks slag from a furnace, following a secondary metallurgy process, in which the same steelworks slag is produced.

Preferably, the aforesaid furnace is a ladle furnace and the tapped slag is a "white" steelworks slag. Otherwise, the aforesaid furnace can be a BOF (basic oxygen furnace) conversion furnace or an EAF furnace (electric arc furnace).

More in detail, the steelworks slag is tapped from the reactor at the molten state, preferably at a temperature comprised between 1700°C and 1800°C.

In this manner, during the mixing step it is possible to prevent external heat supplies in order to obtain the precursor, by exploiting the sensible heat possessed by the steelworks slag tapped from the furnace.

Advantageously, the process also comprises a preheating step, in which the silica additive is preheated in a cyclone within which gas ($CO_2$) is insufflated before the mixing step.

Preferably, the aforesaid preheating step provides for preheating the silica additive at a temperature at least of 500°C, and preferably comprised between 700°C and 1000°C.

In accordance with an advantageous aspect of the present invention, the step of preheating the silica additive is attained by exploiting the heat possessed by the gases exiting from an iron/steel-making furnace, which can be the same furnace from which the steelworks slag is tapped, or a different furnace employed in the iron/steel-making processes, in particular a BOF furnace (oxygen furnace) or EAF (electric arc furnace). Of course, without departing from the protective scope of the present invention, the silica additive can also be mixed with the steelworks slag without having been previously preheated.

In addition, in the event in which the arranging step does not provide for the direct tapping of the steelworks slag, and hence in the event in which the steelworks slag both at a temperature lower than the abovementioned mixing temperature (1300-1800°C), the process, object of the present invention, advantageously comprises a heating step.

More in detail, the heating step can be attained before the mixing step, by heating for example only the steelworks slag in order to bring it to a temperature comprised between 1300°C and 1800°C, or it can be attained during the mixing step, by heating the mixture of steelworks slag together with the silica additive.

Advantageously, the mixing step also provides for the insufflation of a gas, preferably a fuel gas, still more preferably comprising oxygen ($O_2$), in order to mix together the steelworks slag and the silica additive.

Preferably, the insufflation is attained by means of a thermal lance, of the type commonly employed in the iron/steel-making processes, such as for example the BOS process (Basic Oxygen Steelmaking) or the EAF process (Electric Arc Furnace) of type known to the man skilled in the art and therefore not described in detail hereinbelow. Advantageously, the insufflation is executed for a time interval comprised between 5 and 15 minutes.

In this manner, the mixing between the steelworks slag and the silica additive is assisted, since the gas enters into the container, generating flows inside the molten mixture.

In addition, the insufflation of a fuel gas, e.g. comprising oxygen ($O_2$), advantageously allows maintaining or increasing the temperature of the steelworks slag and silica additive mixture, in order to maintain it or increase it preferably within the temperature interval of the mixing step, 1300°C-1800°C.

More in detail, during the aforesaid insufflation, a chemical reaction of iron oxidation is attained, in which the iron, preferably present as free iron or as Wustite (FeO), is oxidized with hematite ($Fe_2O_3$), as reported for example in the following formula:

$$2FeO + 1/2O2 \rightarrow Fe_2O_3 \qquad (1)$$

In particular, the aforesaid iron oxidation reaction is exothermic and advantageously allows maintaining the mixing temperature within the aforesaid interval between 1300°C and 1800°C.

In addition, in accordance with the preferred embodiment in which the silica additive comprises a compound containing carbon (e.g. comprising coke or carbon-black), the insufflation of oxygen also allows obtaining the combustion of the same carbon, according to the reaction reported in the following formula:

$$C + CO_2 \rightarrow 2\,CO \qquad (2)$$

Therefore, the compound containing carbon present in the silica additive advantageously acts as a fuel during the steps of heating and/or maintenance of the temperature of the steelworks slag, reducing the need to employ additional fuels and also in such case reducing the environmental impact of the process, object of the present invention.

Advantageously, the steelworks slag is provided with a first basicity index IB1, preferably greater than 2, calculated as the ratio between the sum of the calcium oxide and the magnesium oxide with the silicon oxide, according to the formula reported hereinbelow:

$$IB1 = \frac{CaO_{slag} + MgO_{slag}}{SiO_{2\,slag}} \qquad (3)$$

in which $CaO_{slag}$, $MgO_{slag}$ and $SiO_{2\,slag}$ respectively indicate the percentage quantities by weight of the calcium oxide, of the magnesium oxide and of the silicon oxide present within the steelworks slag.

Advantageously, the precursor obtained from the process, object of the present invention, is provided with a second basicity index (IB2), lower than the first basicity index (IB1) and lower than 1.6.

Advantageously, the second basicity index (IB2) is also calculated as the ratio between the sum of the calcium oxide and the magnesium oxide with the silicon oxide, according to the formula reported hereinbelow:

$$IB2 = \frac{CaO_{prec} + MgO_{prec}}{SiO_{2\,prec}} \qquad (4)$$

in which $CaO_{prec}$, $MgO_{prec}$ and $SiO_{2\,prec}$ respectively indicate the percentage quantities of the calcium oxide, of the magnesium oxide and of the silicon oxide present within the obtained precursor.

Preferably, the second basicity index (IB2) of the precursor is comprised between 1.1 and 1.3.

Advantageously, the process also provides for a vitrification step, in which the obtained precursor is cooled in water for a time lower than 3 seconds, preferably in order to bring it from the melting temperature to a temperature lower than 1000°C.

In particular, in the aforesaid vitrification step, the precursor is quickly cooled in water so as to block the microstructure of the precursor by means of the aforesaid vitrification. The vitrification step advantageously allows obtaining the pozzolanic properties, on which the (latent) hydraulic properties of the obtained precursor depend, and preferably reducing the release of harmful elements (such as for example of heavy metals) by the precursor even once solidified.

Advantageously, the process also comprises a granulation step, attained following the vitrification treatment, in which the obtained precursor is ground, preferably to a grain size D90 comprised between 2 and 4 mm.

In addition, it was advantageously found that such vitrification step is rendered particularly efficient by the mixing of the steelworks slag and of the silica additive at a temperature comprised between 1300°C and 1800°C with respect to that possible with the quick cooling of the steelworks slag alone.

More in detail, it was surprisingly found that the addition of the silica additive allows obtaining a mixture whose melting temperature is reduced (preferably by about 350°C) with respect to the melting temperature of the steelworks slag, and in particular preferably is reduced from about 1700°C-1750°C to about 1350°C-1400°C.

This advantageously allows, given the same temperature, considerably reducing the viscosity of the steelworks slag/silica additive mixture, allowing and simplifying the quick cooling (vitrification) and the granulation step.

Advantageously, the process also provides for a post-cooling step, preferably attained after the vitrification step, in which the precursor is cooled in air, preferably from the temperature of about 1000°C to a temperature of about 200°C.

In this manner, further sensible heat is recovered from the process.

In addition, it was advantageously discovered that the precursor thus obtained, even if similar from the compositional standpoint to the blast furnace slag obtained from the cast iron production, possesses hydraulic properties greater than those of the blast furnace slag itself, therefore being not only an improved alternative from the strictly economic standpoint (since obtained from waste by-products), even if also an improved alternative regarding the hydraulic properties of the final product.

By way of example, reported in table 4 and in figure 2 is the data obtained from the tests executed by comparing the granulated blast furnace slag (GGBS) and an embodiment of the precursor obtained with the process, object of the invention.

In accordance with the embodiment, the precursor is attained starting from a steelworks slag provided with composition indicated in the column "Embodiment" of table 1, to which steelworks sand as silica additive is added, in a quantity of about 30% with respect to the total weight of the steelworks slag.

Advantageously, the obtained precursor comprises at least silicon oxide ($SiO_2$), in a quantity by weight comprised between 26% and 53% with respect to the total weight of the precursor, aluminum oxide ($Al_2O_3$) in a quantity by weight comprised between 3% and 17% with respect to the total weight of the precursor and calcium oxide (CaO) in a quantity by weight comprised between 21% and 50% with respect to the total weight of the precursor.

The aforesaid composition is reported in table 5.

Table 5: Composition of the precursor obtained with the present method.

| Oxides | Compositional range [%] | Preferred example [%] |
|---|---|---|
| $SiO_2$ | 26-53 | 36.2 |
| $Al_2O_3$ | 3-17 | 10.7 |
| CaO | 21-50 | 40.9 |
| MgO | 1-20 | 7.4 |
| $Fe_2O_3$ | 0.1-5.6 | 0.72 |
| $TiO_2$ | 0.1-3.0 | 0.68 |
| MnO | 0.1-3.6 | 0.27 |
| $K_2O$ | 0.1-2.5 | 0.45 |
| $Na_2O$ | 0.1-1.6 | 0.22 |
| $P_2O_5$ | 0-0.1 | 0.01 |
| $SO_3$ | 0.2-5.5 | 2.6 |

The two materials (blast furnace slag and precursor obtained by means of the present process) were tested, each mixed in 1:1 ratio by weight with a cement of class CEM I 52.5.

On the aforesaid samples, a calorimetry test was carried out, in which the hydration heat of the binder was measured with the semi-adiabatic method, in order to determine the pozzolanic index, and a mechanical compression test, in order to determine the activity (IA).

More in detail, the pozzolanic index indicates the cement fraction that determines an equal advancement of the hydration reactions with respect to the unit weight of pozzolanic material, while the activity index (IA) measures the ratio between the compression strength of test pieces made with a mixture 1:1 by weight of the precursor (or blast furnace slag) and cement (CEM I 52.5) and of test pieces made with only cement (CEM I 52.5).

The measured values are reported respectively in figure 2 for the pozzolanic index, and in table 4 for the activity index (IA).

Table 4 - Mechanical test results - Activity index (IA)

| Material | IA at 7 days | IA at 28 days |
|---|---|---|
| Blast furnace slag | 0.61 | 0.93 |
| White slag and steelworks sand mixture | 0.65 | 1.03 |

As is inferred from the obtained results, and as set forth above, the process that is the object of the present invention allows obtaining a precursor which has greater hydraulic properties (pozzolanic index) and mechanical properties (activity index) with respect to the blast furnace slag obtained as by-product from the cast iron production process.

The invention thus conceived therefore attains the pre-established objects.

**Claims**

1. Process for producing a precursor for a hydraulic binder **characterized in that** it comprises:

    - a step of arranging:

        - a steelworks slag within a container;
        said steelworks slag comprising a combination of calcium oxide (CaO), silicon oxide ($SiO_2$), and aluminum oxide ($Al_2O_3$), which is in a quantity greater than or equal to 60% with respect to the weight of said slag, and iron oxides in a quantity lower than or equal to 15% with respect to the weight of said slag;
        - a silica additive comprising at least silicon oxide ($SiO_2$);

- an admixing step, in which said silica additive is poured into said container, in a quantity comprised between 10 % and 40 % with respect to the total weight;
- a mixing step, in which said steelworks slag is mixed with said silica additive at a temperature comprised between 1300 and 1800 °C, in order to obtain said precursor.

2. Process according to claim 1, **characterized in that** the step of arranging said steelworks slag provides for the tapping of said steelworks slag from a furnace, following a secondary metallurgy process; said steelworks slag being produced by the aforesaid secondary metallurgy process.

3. Process according to claim 2, **characterized in that** said steelworks slag is tapped at the molten state at a temperature comprised between 1700 °C and 1800 °C.

4. Process according to any one of the preceding claims, **characterized in that** said silica additive comprises steelworks sand, which contains at least silicon oxide ($SiO_2$) in a quantity greater than 80% with respect to the weight of the silica additive and a compound containing carbon, in a quantity greater than 3%, with respect to the weight of the silica additive.

5. Process according to any one of the preceding claims, **characterized in that** said mixing step provides for the insufflation of a gas in order to mix together said steelworks slag and said silica additive.

6. Process according to claim 5, **characterized in that** said insufflation is executed for a time interval comprised between 5 and 15 minutes.

7. Process according to any one of the preceding claims, **characterized in that** said steelworks slag is provided with a first basicity index (IB1) and said precursor is provided with a second basicity index (IB2) lower than the first basicity index (IB1) and lower than 1.6.

8. Process according to any one of the preceding claims, **characterized in that** it provides for a vitrification step, in which said precursor is cooled in water for a time lower than 3 seconds.

9. Process according to any one of the preceding claims, **characterized in that** it provides for a post-cooling step, in which said precursor is cooled in air from a temperature of about 1000°C to a temperature of about 200°C.

10. Process according to any one of the preceding claims, **characterized in that** said obtained precursor comprises at least silicon oxide ($SiO_2$), in a quantity by weight comprised between 26% and 53% with respect to the total weight of the precursor, aluminum oxide ($Al_2O_3$) in a quantity by weight comprised between 3% and 17% with respect to the total weight of the precursor and calcium oxide (CaO) in a quantity by weight comprised between 21% and 50% with respect to the total weight of the precursor.

0 100 SiO₂
Foundry sand

Precursor for
hydraulic binder

Blast furnace slag

Steelworks slag

Portland cement

CaO, MgO

Al₂O₃, Fe₂O₃

Fig. 1

**Mixture 50% CEM I - 50% Precursor**

Hydration heat (J/g)

2

1

1  Blast furnace slag

2  Steelworks slag and foundry sand

Time (h)

Fig. 2

**Europäisches Patentamt**
**European Patent Office**
**Office européen des brevets**

# EUROPEAN SEARCH REPORT

Application Number

**EP 21 19 8986**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 546 530 A1 (SIDERURGIE FSE INST RECH [FR]) 30 November 1984 (1984-11-30) * the whole document * | 1-10 | INV. C04B5/06 |
| X | US 2004/093988 A1 (MICHAUD POUPARDIN VALERIE [FR] ET AL) 20 May 2004 (2004-05-20) * the whole document * | 1-10 | |

**TECHNICAL FIELDS SEARCHED (IPC)**

**C04B**

The present search report has been drawn up for all claims

| Place of search | Date of completion of the search | Examiner |
|---|---|---|
| **Munich** | **23 February 2022** | **Roesky, Rainer** |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 089 061 A1**

## ANNEX TO THE EUROPEAN SEARCH REPORT
## ON EUROPEAN PATENT APPLICATION NO.

EP 21 19 8986

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2022

| Patent document cited in search report | | | Publication date | Patent family member(s) | | | Publication date |
|---|---|---|---|---|---|---|---|
| FR 2546530 | A1 | | 30-11-1984 | NONE | | | |
| US 2004093988 | A1 | | 20-05-2004 | AT | 347540 | T | 15-12-2006 |
| | | | | BR | 0206959 | A | 09-03-2004 |
| | | | | CA | 2437224 | A1 | 15-08-2002 |
| | | | | CZ | 20032074 | A3 | 17-03-2004 |
| | | | | DE | 60216569 | T2 | 11-10-2007 |
| | | | | DK | 1370501 | T3 | 02-04-2007 |
| | | | | EP | 1370501 | A1 | 17-12-2003 |
| | | | | ES | 2275834 | T3 | 16-06-2007 |
| | | | | FR | 2820420 | A1 | 09-08-2002 |
| | | | | JP | 4102668 | B2 | 18-06-2008 |
| | | | | JP | 2004526651 | A | 02-09-2004 |
| | | | | KR | 20030088025 | A | 15-11-2003 |
| | | | | PL | 364160 | A1 | 13-12-2004 |
| | | | | UA | 74237 | C2 | 15-11-2005 |
| | | | | US | 2004093988 | A1 | 20-05-2004 |
| | | | | WO | 02062720 | A1 | 15-08-2002 |
| | | | | ZA | 200305835 | B | 28-09-2004 |

EPO FORM P0459

For more details about this annex : see Official Journal of the European Patent Office, No. 12/82